# EUROPEAN PATENT SPECIFICATION

(11) **EP 0 465 268 B1**
(45) Date of publication and mention of the grant of the patent: **07.12.1994**
(21) Application number: 91306142.0
(22) Date of filing: 05.07.1991
(51) Int. Cl.: F16J 15/08, F02F 11/00

(54) **Metallic gasket**
Metalldichtung
Garniture d'étanchéité métallique

(30) Priority: 05.07.1990 JP 178423/90; 23.05.1991 JP 147780/91
(43) Date of publication of application: 08.01.1992
(73) Proprietor: NIHON METAL GASKET CO. LTD, Kumagaya-shi, Saitama 360 (JP)
(72) Inventor: Ueta, Kosaku, Oaza-Mikajiri, Kumagaya-shi, Saitama 360 (JP); Ueta, Ikkoh, Oaza-Mikajiri, Kumagaya-shi, Saitama 360 (JP)
(74) Representative: Deans, Michael John Percy

(56) References cited:
- EP-A- 0 230 804
- PATENT ABSTRACTS OF JAPAN vol. 13, no. 217 (M-828)(3565) 22 May 1989,& JP-A-135057 (NIPPON METAL GASKET) 06 February 1989

## Description

The present invention relates to metallic gaskets designed to be interposed between the joining surfaces of a cylinder head and a cylinder block which form part of an internal combustion engine, thereby preventing leakages of combustion gas, cooling water, lubricating oil, etc.

The interposing of a gasket between the joining surfaces of a cylinder block and a cylinder head forming part of an internal combustion engine, to impart a sealing function thereto is well known in the art. Of particular importance is a seal to be provided around a combustion chamber. A failure in providing sufficient sealing to the combustion chamber would cause a leakage of the combustion gas from within, resulting in a pressure drop.

According to one approach for solving this problem, an array of beads are located concentrically with a combustion chamber bore formed in an elastic base plate of a metallic gasket. As the metallic gasket is clamped in place by means of bolts, the beads produce repulsive force, which is in turn used to impart a sealing function to the peripheral edge of the combustion chamber. In order to prevent the breaking-down of the beads by fatigue in this case, for instance, stoppers are located on flat segments of the metallic gasket between the combustion chamber bore and the beads, thereby limiting the magnitude of amplitude of the beads so as to prevent their complete yielding.

A prior proposed such arrangement (see EP-A-0 230 804) is shown in Fig. 8 in a sectional view showing only an inter-cylinder part for the purpose of simplicity. Reference numerals 10-1 and 10-2 stand for base plates, each formed of a resilient material. While an auxiliary plate 12 covered with a shim plate 11 is sandwiched between the base plates, arched beads 13-1 and 13-2 are symmetrically located thereon in opposite relation. The shim plate 11 is then folded down at both its ends to form bends serving as stoppers. These bends limit the amplitude of vibration of the beads.

In recent years, however, higher-performance and weight-saving engines of smaller size and larger displacement have been in great demand, resulting in a drop of their rigidity. In addition, closely cylindered engines are now often needed because of increasing displacement without changing their inter-bore pitch and reducing their overall size. Therefore, even with a metallic gasket using arched beads to limit the magnitude of vibrational amplitude, there is insufficient room for providing stoppers.

For instance, when the stopper is 1.5 mm or below in width, pressure produced by bolting is received at an area so narrow that a very high pressure is applied to the stopper. The amplitude of vibration caused by the operation of an engine is applied to the stopper in the form of waves. Consequently, the surface of the engine seal deforms, making sealing gradually incomplete.

In accordance with the present invention, there is provided a metallic gasket adapted to be interposed between cylinder head and cylinder block in a multi-cylindered internal combustion engine, the gasket having an opening corresponding to each combustion chamber of the cylinder block, the gasket comprising two base plates formed of resilient metal, and each combustion chamber gasket opening having beads adjacent the peripheral edge thereof; the gasket being characterised in that one of said base plates is provided with an array of arched beads which are associated with odd-numbered cylinders, in that the other base plate is provided with an array of arched beads which are associated with even-numbered cylinders, in that, for any inter-cylinder space separating an odd-numbered cylinder from an even-numbered cylinder, the bead associated with the odd-numbered cylinder is displaced from the centre of the inter-cylinder space in one direction to define a flat for a stopper, and the bead associated with the even-numbered cylinder is displaced in the opposite direction also to define a flat for a stopper, and in that said base plates are laminated antisymmetrically with respect to each other.

The invention is hereinafter more particularly described by way of example only with reference to the accompanying drawings, in which:-
Figure 1 is an enlarged schematic sectional view through an embodiment of metallic gasket constructed according to this invention;
Figures 2 to 4 are similar views showing the constructions of further embodiments of metallic gasket, each constructed according to this invention;
Figure 5 is a partly cut-away, schematic plan view showing part of a metallic gasket according to the present invention;
Figures 6(a) and 6(b) are sectional views along the lines A-A′ and B-B′ in Figure 5;
Figure 7 is a view similar to Figures 1 to 4 and 6(a) illustrating a further embodiment of metal gasket according to the invention; and
Figure 8 illustrates a metallic gasket, as explained above.

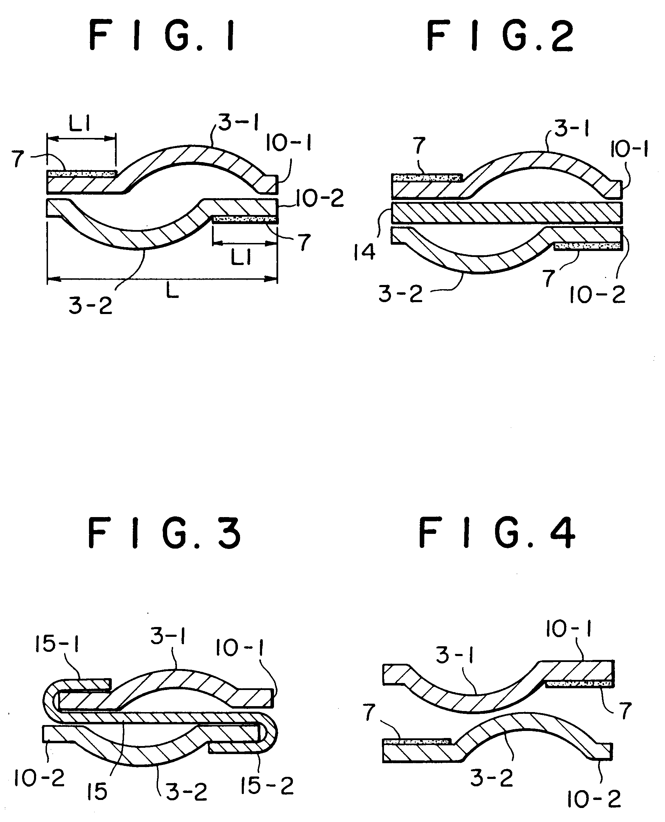

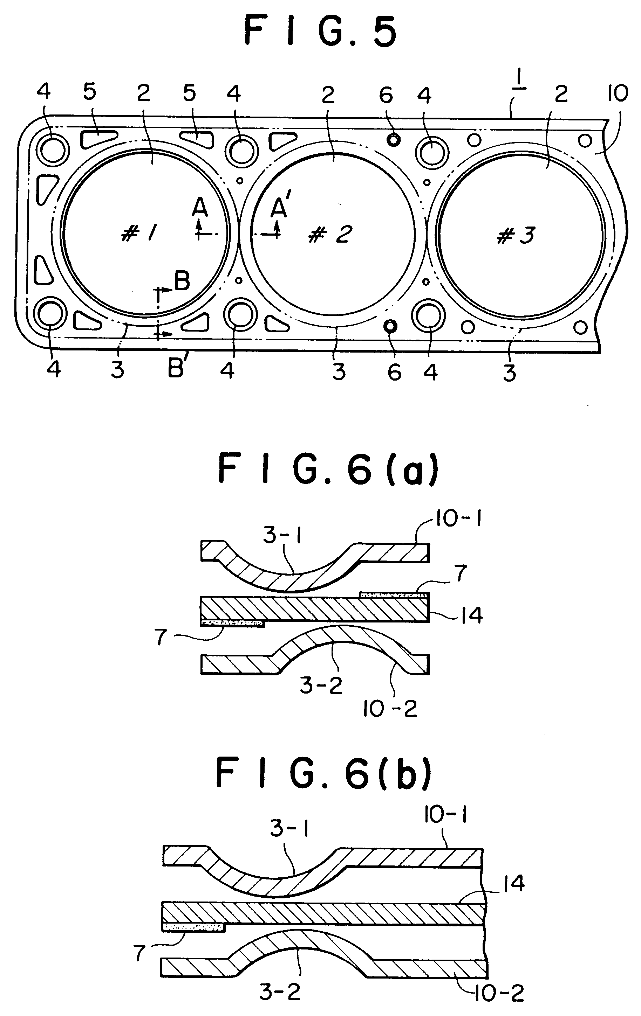

Figure 1 is a sectional view illustrative of one embodiment of the metallic gasket for a multi-cylindered arrangement as it would be seen taken along a section corresponding to the line A-A′ of Figure 5.

Referring first to the general plan construction shown in Figure 5, a metallic gasket body, shown at 1, includes a base plate 10 made of an elastic material. As illustrated in Figure 1, the base plate 10 is constructed from upper and lower plates 10-1 and 10-2, and has openings 2 located in association with combustion chamber bores, and each provided at its edge with a bead 3, as will be described later. It is noted that reference numeral 4 indicates a bolt hole through which a bolt or screw is inserted to fix the metallic gasket in place when it is built in an engine, 5 a hole through which cooling water circulates, and 6 an oil hole.

The construction of the metallic gasket will now be explained with reference to Figure 1.

As mentioned above, the metallic gasket is basically constructed from two upper and lower plates 10-1 and 10-2. One plate 10-1 in Figure 1 is provided with an arched bead 3-1 which is associated with an odd-numbered cylinder and displaced righthandedly from the centre of the inter-cylinder space L between the said cylinder and the next adjacent cylinder to define a flat segment L₁ on the left side. A stopper 7 is attached to this flat segment. The other base plate 10-2 is provided with an arched bead 3-2, which is associated with an even-numbered cylinder and displaced lefthandedly from the centre of the inter-cylinder space L to define a flat segment L₁ in the opposite or right side. A stopper 7 is attached to this flat segment L₁. Thus, the upper and lower base plates 10-1 and 10-2 are alternately provided with the stoppers. In other words, the bead 3-1 on the base plate 10-1 is located on the outer edge of a cylinder #1 with the bead location being somewhat shifted toward a cylinder #2, not lying at the centre of the inter-cylinder space L. Consequently, a flat segment L₁ is defined at the left end of the inter-cylinder space L to receive the stopper 7.

The bead 3-1 on the base plate 10-2, on the other hand, is located on the outer edge of the cylinder #2 and, contrary to the above-mentioned bead 3-1, is shifted toward the cylinder #1. Consequently, the flat segment L₁ is defined at the right end of the inter-cylinder space L to receive the associated stopper 7. In other words, the base plates 10-1 and 10-2 are laminated together antisymmetrically with respect to the bead locations.

In the thus formed metallic gasket arrangement, the arched beads are displaced with respect to each other in a limited space between the adjacent cylinders, enabling flat segments to be defined on the opposite sides. For instance, the flat segment is defined on the left side of the base plate 10-1 on which the bead 3-1 is located righthandedly, while the flat segment is defined on the right side fo the base plate 10-2 on which the bead 3-2 is located lefthandedly.

It is well-known that beads having a width less than 2 mm are unsatisfactory. In prior arrangements, therefore, the inter-cylinder space L needed to be at least 5 mm in order to leave stopper locations, each of 1.5 mm in width, at both sides of each bead. By displacing the beads with respect to each other in opposite directions to define flat segments on which stoppers are to be positioned, however, it is possible to find sufficient stopper spaces of 1.5 mm or more in width at a lesser width of inter-cylinder space.

It is understood that the base plates may be formed of springy SUS 301 or SUS 304 (JIS), with a thickness lying in the range of 0.20 to 0.30 mm. It is also noted that the stoppers may be formed of an alloy consisting of, e.g., 20% of nickel and 20% or zinc and 60% of copper by flame spraying, with a thickness lying in the range of 0.5 to 0.15 mm.

Figure 2 illustrates the construction of another embodiment of metallic gasket also according to this invention. In Figure 2, the same parts as in Figure 1 are indicated by the same reference numerals and so will be not explained.

In this embodiment, an auxiliary plate 14 is sandwiched between base plates 10-1 and 10-2, each having an arched bead on its outside. This embodiment is applicable to an engine including a close array of cylinders.

The auxiliary plate 14 may be formed of SUS 304 or JIS SPC with a thickness lying in the range of 0.3 to 1.5 mm.

Figure 3 illustrates the construction of a further embodiment of metallic gasket according to this invention.

In this embodiment, a shim plate 15 is inserted beween base plates 10-1 and 10-2 and is folded up and down at its ends to form folds 15-1 and 15-2 serving as stoppers. Even with this embodiment, stopper locations of sufficient width are achievable. The shim plate may be formed of SUS 304 or SUS 301 with a thickness lying usually in the range of 0.08 to 0.15 mm.

Figure 4 shows the construction of a still further embodiment of metallic gasket according to this invention.

In this embodiment, the apices of arched beads 3-1 and 3-2 are displaced from each other, while they are located oppositely to each other, forming diagonally located flat segments on the inside of the base plates, on which stoppers 7 are provided. In this embodiment, not only are stopper locations ensured, but also an increased pressure may be obtained on the metallic gasket between the cylinders. This is because one bead engages another associated bead adjacent its apex, thereby increasing the spring constant at the bead locations.

Figure 6 shows the construction of a still further embodiment of the metallic gasket according to this invention, Figure 6(a) being a sectional view taken along the line A-A′ of Fighure 5 and Figure 6(b) a sectional view taken along the line B-B′ of Figure 5.

In this embodiment, an auxiliary plate 14 is sandwiched between base plates 10-1 and 10-2, each having an arched bead 3-1 or 3-2 on its inside. Stoppers 7 are then provided on the auxiliary plate 14. Even with this embodiment, effects similar to those already mentioned are achievable.

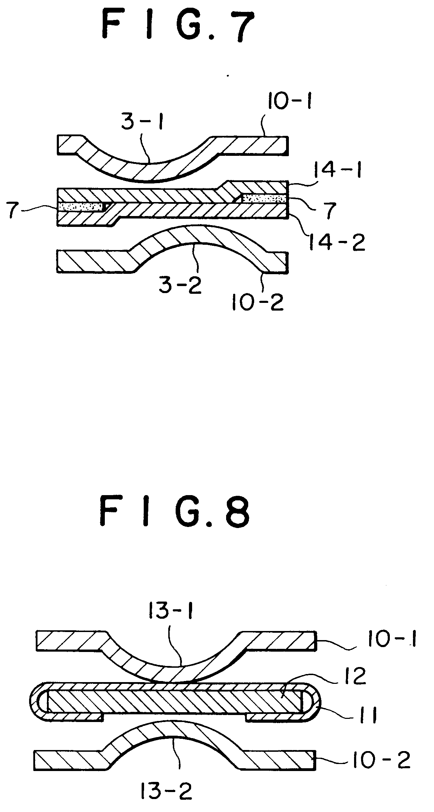

Figure 7 shows the construction of a still further embodiment of metallic gasket according to this invention.

In this embodiment, an auxiliary plate is divided into two parts 14-1 and 14-2, between which stoppers are interposed. It is noted that when the stoppers are formed of a porous material by flame spraying, the pores need not be filled because of being covered with the parts 14-1 and 14-2. This embodiment employs a two-part sealing achieved by both the stoppers and the beads, obtaining further improvement in sealing performance.

The stoppers may be formed of metals by flame spraying or plating, made of flat metal materials or moulded of metal materials.

## Claims

1. A metallic gasket adapted to be interposed between cylinder head and cylinder block in a multi-cylindered internal combustion engine, the gasket having an opening (2) corresponding to each combustion chamber of the cylinder block, the gasket comprising two base plates (10-1, 10-2) formed of resilient metal, and each combustion chamber gasket opening having beads (3-1, 3-2) adjacent the peripheral edge thereof; the gasket being characterised in that one (10-1) of said base plates is provided with an array of arched beads (3-1) which are associated with odd-numbered cylinders (#1, #3), in that the other base plate (10-2) is provided with an array of arched beads (3-2) which are associated with even-numbered cylinders (#2), in that, for any inter-cylinder space (L) separating an odd-numbered cylinder from an even-numbered cylinder, the bead (3-1) associated with the odd numbered cylinder is displaced from the centre of the inter-cylinder space (L) in one direction to define a flat for a stopper (7), and the bead (3-2) associated with the even-numbered cylinder is displaced in the opposite direction also to define a flat for a stopper (7), and in that said base plates (10-1,10-2) are laminated antisymmetrically with respect to each other.

2. A metallic gasket as claimed in Claim 1, further characterised in that said stoppers are formed by folding one end (15-1) of a shim plate (15) sandwiched between said base plates up, and the other end (15-2) down.

3. A metallic gasket as claimed in Claim 1, further characterised in that said stoppers (7) are provided on respective upper and lower portions of an auxiliary plate (14) sandwiched between said base plates.

4. A metallic gasket as claimed in Claim 1, further characterised in that an auxiliary plate is divided into two parts (14-1, 14-2) between which said stoppers (7) are interposed.

5. A metallic gasket as claimed in Claim 2, 3 or 4, further characterised in that said stoppers (7) vary in thickness.

## Patentansprüche

1. Metallische Dichtung, geeignet zum Einsetzen zwischen Zylinderkopf und Zylinderblock in einer mehrzylindrigen Brennkraftmaschine, wobei die Dichtung eine Öffnung (2) entsprechend zu jeder Brennkammer des Zylinderblocks aufweist, die Dichtung zwei Grundplatten (10-1, 10-2) aus elastischem Metall umfaßt und jede Brennkammerdichtungsöffnung Sicken (3-1,3-2) benachbart zum Randbereich hiervon aufweist, wobei die Dichtung dadurch gekennzeichnet ist, daß eine (10-1) der besagten Grundplatten mit einer Reihe von gewölbten Sicken (3-1) versehen ist, die ungeradzahligen Zylindern (#1,#3) zugeordnet sind, daß die andere Grundplatte (10-2) mit einer Reihe von gewölbten Sicken (3-2) versehen ist, die geradzahligen Zylindern (#2) zugeordnet sind, daß für jeden Zwischenzylinderraum (L), der ungeradzahlige Zylinder von einem geradzahligen Zylinder trennt, die Sicke (3-1), die dem ungeradzahligen Zylinder zugeordnet ist, von der Mitte des Zwischenzylinderraums (L) in einer Richtung versetzt ist, um eine Fläche für einen Stopper (7) zu definieren, und die Sicke (3-2), die dem geradzahligen Zylinder zugeordnet ist, in entgegengesetzter Richtung versetzt ist, um ebenfalls eine Fläche für einen Stopper (7) zu bilden, und daß besagte Grundplatten (10-1,10-2) antisymmetrisch zueinander geschichtet sind.

2. Metallische Dichtung, wie in Anspruch 1 beansprucht, weiter dadurch gekennzeichnet, daß besagte Stopper durch Umfalzen eines Endes (15-1) einer Einlegeplatte (15) nach oben und des anderen Endes (15-2) nach unten gebildet sind, die zwischen besagten Grundplatten eingelegt ist.

3. Metallische Dichtung, wie in Anspruch 1 beansprucht, weiter dadurch gekennzeichnet, daß besagte Stopper (7) auf entsprechenden oberen und unteren Abschnitten einer Hilfsplatte (14) vorgesehen sind, die zwischen besagten Grundplatten eingelegt ist.

4. Metallische Dichtung, wie in Anspruch 1 beansprucht, weiter dadurch gekennzeichnet, daß eine Hilfsplatte in zwei Teile (14-1,14-2), zwischen denen die Stopper (7) angeordnet sind, unterteilt ist.

5. Metallische Dichtung, wie in Anspruch 2, 3 oder 4 beansprucht, weiter dadurch gekennzeichnet, daß besagte Stopper (7) in ihrer Stärke variieren.

## Revendications

1. Une garniture d'étanchéité métallique conçue pour être placée entre la culasse et le bloc-cylindre d'un moteur à combustion interne à plusieurs cylindres, cette garniture possédant une ouverture (2) située en face de chaque chambre de combustion du bloc-cylindre, cette garniture étant constituée de deux plaques de base (10-1) et (10-2) en métal à haute élasticité, et chaque ouverture du joint d'étanchéité de la chambre de combustion ayant un rebord bombé (3-1) et (3-2) sur son pourtour; la garniture étant caractérisée en ce que l'une des plaques de base (10-1) est pourvue d'une série de rebords bombés (3-1) associés à chaque cylindre impair (#1) et (#3) et l'autre plaque de base (10-2) est pourvue d'une autre série de rebords bombés (3-2) associés à chaque cylindre pair (#2), de sorte que pour chaque espace inter-cylindre (L) séparant un cylindre pair d'un cylindre impair, le rebord bombé (3-1) associé à un cylindre impair est décalé par rapport au centre de cet espace inter-cylindre (L) dans une direction donnée afin de déterminer un emplacement pour un joint (7), et le rebord bombé (3-2) associé au cylindre pair est décalé dans une direction opposée toujours pour offrir un emplacement pour l'implantation d'un joint (7), et en ce que ces deux plaques (10-1) et (10-2) sont disposées l'une contre l'autre mais de façon asymétrique l'une par rapport à l'autre.

2. Une garniture d'étanchéité métallique selon la revendication 1, caractérisée en outre en ce que les joints peuvent être formés en repliant vers le haut l'extrémité (15-1) de la cale plate secondaire (15) insérée entre les deux plaques de base et vers le bas l'autre extrémité (15-2).

3. Une garniture d'étanchéité métallique selon la revendication 1, caractérisée en outre en ce que les joints (7) sont pourvus respectivement sur les parties inférieure et supérieure d'une plaque secondaire (14) insérée entre les deux plaques de base.

4. Une garniture d'étanchéité métallique selon la revendication 1, caractérisée en outre en ce que la plaque secondaire (14) est divisée en deux parties (14-1) et (14-2) entre lesquelles les joints (7) sont insérés.

5. Une garniture d'étanchéité métallique selon les revendications 2, 3 ou 4, caractérisée en outre en ce que les joints (7) ont une épaisseur variable.
